# EUROPÄISCHE PATENTSCHRIFT

(11) **EP 0 413 005 B1**
(45) Veröffentlichungstag und Bekanntmachung des Hinweises auf die Patenterteilung: **09.11.1994**
(21) Anmeldenummer: 90902136.2
(22) Anmeldetag: 06.02.1990
(51) Int. Cl.: H04L 12/40

(54) **VERFAHREN ZUM VERKÜRZEN EINER VERTEILTEN WARTESCHLANGE**
A METHOD FOR SHORTENING A DISTRIBUTED QUEUE
PROCEDE PERMETTANT DE REDUIRE LA LONGUEUR D'UNE FILE D'ATTENTE REPARTIE

(30) Priorität: 17.02.1989 CH 566/89
(43) Veröffentlichungstag der Anmeldung: 20.02.1991
(73) Patentinhaber: ASCOM TECH AG, CH-3018 Bern (CH)
(72) Erfinder: RAO, Sathyanarayana, CH-3015 Bern (CH); BEELER, Reto, CH-3018 Bern (CH); POTTS, Martin, CH-3115 Gerzensee (CH)
(74) Vertreter: Schwerdtel, Eberhard, Dr.
(86) Internationale Anmeldenummer: CH9000024
(87) Internationale Veröffentlichungsnummer: WO9009711

(56) Entgegenhaltungen:
- WO-A-86/03639

## Beschreibung

Die Erfindung betrifft ein Verfahren zum Verkürzen einer verteilten Warteschlange, die auf einer digitalen Übertragungsleitung mit einer Mehrzahl von Knoten besteht, entsprechend dem Oberbegriff des unabhängigen Anspruches.

Aus der Schrift WO-A-86/03639 und desgleichen aus "The QPSX Man", R.M. Newman et. al., IEEE Communications Magazine, Vol. 26 (April 1988) No. 4, S. 20-28 ist eine Einrichtung zum beliebigen Übertragen digitaler Information zwischen mehreren Knoten über zwei unverzweigte, parallel geführte Busleitungen bekannt. Die Knoten sind seriell an beide Busleitungen angeschlossen, auf denen ununterbrochen und im gleichen Takt adresscodierte Pakete je in nur einer der beiden Richtungen laufen. Jedes Paket besitzt in seinem Kopfteil zwei Bitsegmente, die zum Bilden einer über alle Knoten verteilten Warteschlange erforderlich sind. Das eine Bitsegment weist die Bedeutungen E (empty) oder B (busy) auf, das andere Bitsegment die Bedeutung R (request) oder N (no request). Die durch diese Bedeutungen markierten Pakete werden im folgenden als Leerpaket E, Informationpaket B, Anfragepaket R und Nicht-Anfragepaket N bezeichnet.

Die verteilte Warteschlange ermöglicht jedem Knoten den quasi jederzeitgigen Zugriff zu den Busleitungen, was insbesondere für kurze, dringende Meldungen, z.B. Alarmmeldungen, von Wichtigkeit ist. Die Warteschlange bildet sich bei starkem Übertragungsverkehr aufgrund eines stets wirksamen Protokolls und findet ihr Abbild in jedem Knoten. Dieses Protokoll schreibt folgendes vor:
- In jedem Knoten wird laufend für jedes weitergegebene Anfragepaket. R ein Bit in einen FIFO-Speicher (first-infirst-out) eingelesen und für jedes weitergegebene Leerpaket E ein Bit ausgelesen. Im FIFO-Speicher baut sich hierdurch das genannte Abbild der Warteschlange auf.
- Bei einem Sendewunsch in der einen Richtung wird dieser Wunsch in der umgekehrten Richtung signalisiert. Hierzu empfängt der jeweilige Knoten ein Nicht-Anfragepaket N, wandelt es in ein Anfragepaket R um und sendet dieses aus. Weiter wird der Sendewunsch in identifizierbarer Weise in den FIFO-Speicher eingegeben.
- Sobald der Sendewunsch aus dem FIFO-Speicher ausgelesen wird, gibt dieses Ereignis dem Knoten die Erlaubnis zum Senden. Dieser Knoten empfängt nun ein ankommendes Leerpaket E, füllt es mit Information und sendet es als Informationspaket B aus. Hierauf kann der nächste Sendewunsch entsprechend angemeldet werden.

Das beschriebene Protokoll arbeitet zufriedenstellend und gibt jederzeit einen Interessenausgleich zwischen den beteiligten Knoten. Von Nachteil ist jedoch, dass das auf dem Protokoll aufbauende Verfahren nicht auf Übertragungseinrichtungen anwendbar ist, die eine echte Ringstruktur (ohne irgendwie ausgezeichnete Busende-Einheiten) aufweisen.

Die Aufgabe der Erfindung besteht zum einen darin, diesen Mangel zu beseitigen. Zum anderen ist es die Aufgabe der Erfindung, die Länge und Ausdehnung der jeweils vorhandenen, verteilten Warteschlange zu minimieren und eventuell auch mehrere Warteschlangen nebeneinander zuzulassen.

Die Lösung dieser Aufgabe ist durch den unabhängigen Anspruch gegeben. Die abhängigen Ansprüche geben Ausgestaltungen der Erfindung an.

Die Vorteile der Erfindung ergeben sich aus der Aufgabenstellung. So ist das Bilden von verteilten Warteschlangen nun bei jeder Art von Ubertragungseinrichtung, insbesondere auch bei ringförmigen Einrichtungen möglich. Weiter wird die durchschnittliche Zahl der mittels einer verteilten Warteschlange zusammengefassten Knoten verkleinert, wodurch sich die mittlere Zugriffsverzögerung wesentlich verringert.

Im folgenden wird die Erfindung anhand von sieben Figuren beispielsweise näher beschrieben. Es zeigen:
Fig. 1 - erste Übertragungseinrichtung
Fig. 2 - zweite Übertragungseinrichtung
Fig. 3 - Aufbau eines Übertragungspakets
Fig. 4 - Prozedere einer Warteschlange in einem Knoten
Fig. 5 - Blockschaltbild eines ersten FIFO-Speichers
Fig. 6 - Blockschaltbild eines zweiten FIFO-Speichers
Fig. 7 - Schema eines dritten FIFO-Speichers.

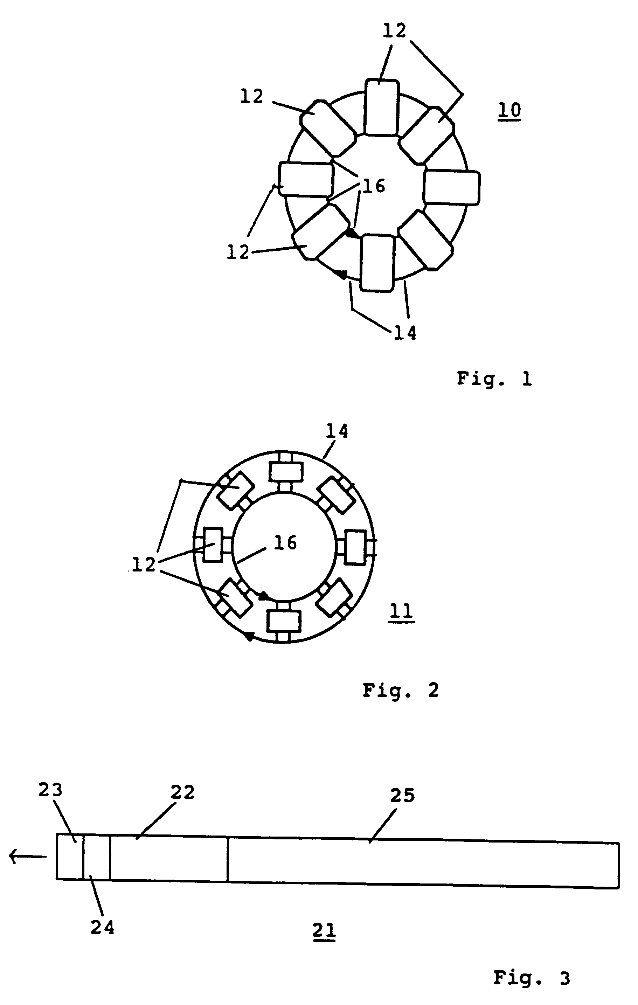

Fig. 1 zeigt eine erste Übertragungseinrichtung 10 mit einer Mehrzahl, z.B. acht gleichberechtigten Knoten 12. Diese sind an zwei ringförmig angeordnete Busleitungen 14 und 16 angeschlossen, von denen die eine (14) im Uhrzeigersinn betrieben wird und die andere (16) entgegen dem Uhrzeigersinn. Die Knoten 12 und die Busleitungen 14, 16 sind so miteinander verbunden, dass die auf den letzteren (14, 16) laufende Information auch durch die Knoten 12 läuft.

Fig. 2 zeigt eine zweite Übertragungseinrichtung 11, die ganz ähnlich aufgebaut ist wie die Einrichtung nach Fig. 1. Der Unterschied besteht darin, dass in Fig. 2 die Knoten 12 so an die beiden Busleitungen 14, 16 angeschlossen sind, dass hierbei die auf diesen Leitungen 14, 16 laufende Information im wesentlichen auf den Leitungen bleibt und die Knoten 12 die Information von diesen (14, 16) abzweigen bzw. auf diese abgeben.

Auf den Busleitungen 14 und 16 laufen ununterbrochen und im gleichen Takt adresscodierte Pakete 21 um. Fig. 3 zeigt ein derartiges Paket 21. Es ist aufgeteilt in einen Kopfteil 22 und einen zeitlich später auftretenden oder auch direkt anschliessenden Informationsteil 25. Im Kopfteil 22 sind zwei Bereiche 23 und 24 ausgeschieden, bevorzugt jeweils ein einziges Bit, die die Bedeutung des jeweiligen Pakets angeben. Der Bereich 23 gibt an, ob es sich um ein Leerpaket E oder um ein Informationspaket B handelt, der Bereich 24 unterscheidet entsprechend Anfragepakete R und Nicht-Anfragepakete N.

Da die Übertragungseinrichtungen 10 oder 11 grundsätzlich über beide Busleitungen 14, 16 Information übertragen können, wird nach dem genannten Stand der Technik jeweils für die gewählte übertragungsrichtung der Bereich 23 mit den Bedeutungen E oder B und entgegen der gewählten Übertragungsrichtung der Bereich 24 mit den Bedeutungen N oder R verwendet. Hierbei werden diese Bedeutungsbereiche 23, 24 unabhängig voneinander für unabhängige Vorgänge der beiden Richtungen verwendet.

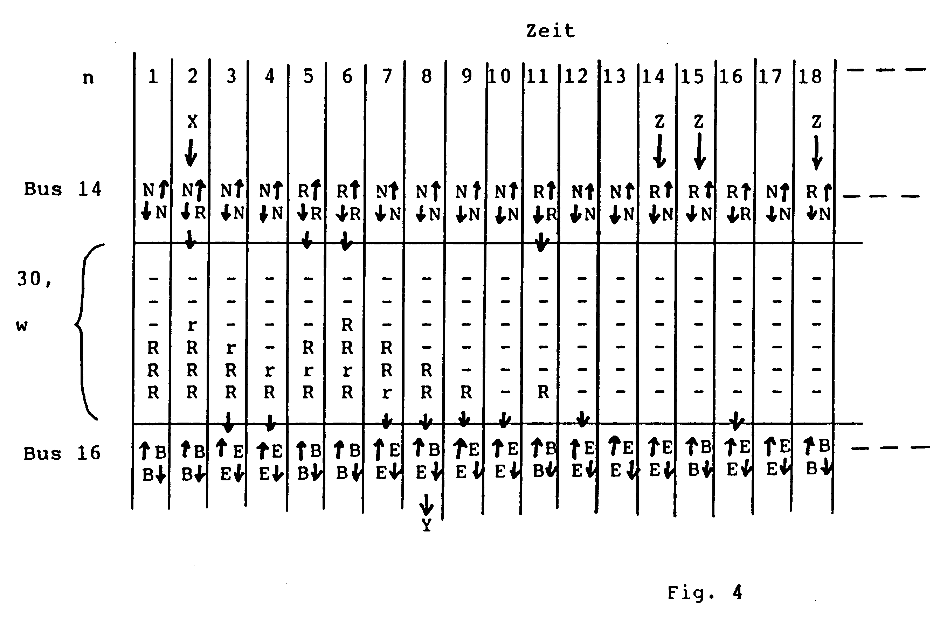

Fig. 4 zeigt für eine einzige Übertragungsrichtung und einen einzigen Knoten 12 das Prozedere einer Warteschlange W. Diese Warteschlange W baut sich schrittweise mit den auf den beiden Busleitungen 14, 16 laufenden Paketen 21 auf und ab. In der obersten Zeile sind daher diese Schritte n durchnumeriert, beginnend mit 1. In der zweiten Zeile sind Ereignisse X und Z aufgetragen, die nachfolgend beschrieben werden.

In der dritten Zeile ist angegeben, welche Sorte Pakete N und R während des jeweiligen Schrittes n den betrachteten Knoten über die Busleitung 14 erreichen und verlassen. Hierauf folgt im Mittelteil der Figur die Darstellung des jeweiligen Warteschlangenabbildes w. Dieses Abbild ist an einen weiter hinten eingehend beschriebenen FIFO-Speicher 30 (first-in-first-out) gebunden und zeigt an, wieviele Anfragen R insgesamt zu erledigen sind, bevor eine eigene Anfrage r gestartet werden kann.

In der untersten Zeile wird schliesslich noch angegeben, welche Sorte Pakete E und B den betrachteten Knoten über die andere Busleitung 16 erreichen und verlassen.

Die Warteschlange W und mit ihr ihr Abbild w baut sich entsprechend dem genannten, bekannten Protokoll auf und ab. Im einzelnen erklärt sich dieser Vorgang anhand des Beispieles von Fig. 4 wie folgt:

Schritt 1: Das Abbild w besteht momentan aus 3 Anfragen R. Auf dem Bus 14 kommt und geht ein Nicht-Anfragepaket N, auf dem Bus 16 ein Informationspaket B. Das Abbild w verändert sich damit nicht.

Schritt 2: Beim Knoten besteht der Wunsch zum Aussenden von Information, was durch das Zeichen X angezeigt wird. Auf dem Bus 14 kommt ein Nicht-Anfragepaket N an, das wegen des Sendewunsches X in ein Anfragepaket R umgewandelt und als solches ausgesandt wird. In das Abbild w der Warteschlange W (und damit in diese selbst) wird der Sendewunsch als Anfrage r und damit wiedererkennbar eingelesen. Auf dem Bus 16 passiert ein Informationspaket B.

Schritte 3 und 4: Auf dem Bus 14 passiert jeweils ein Nicht-Anfragepaket N, auf dem Bus 16 ein Leerpaket E. Hierdurch reduziert sich die Länge des Abbildes w jeweils um eine Einheit R.

Schritte 5 und 6: Auf dem Bus 14 passiert jeweils ein Anfragepaket R und auf dem Bus 16 ein Informationspaket. Hierdurch verlängert sich das Abbild w wieder auf 4 Anfragen.

Schritte 7 bis 10: Auf dem Bus 14 passiert jeweils ein Nicht-Anfragepaket N, auf dem Bus 16 ein Leerpaket E. Hierdurch baut sich die Länge des Abbildes w bis auf Null ab. Bei Schritt 8 wird die Anfrage r ausgelesen, was die Umwandlung des zugeordneten Leerpaketes E in ein Informationspaket B bewirkt und als Ereignis Y gekennzeichnet ist.

Schritte 11 und 12: Aufgrund eines Anfragepaketes R auf dem Bus 14 baut sich wieder eine Abbildschlange w auf bzw. wegen eines Leerpaketes E auf dem Bus 16 wieder ab.

Bis hierher ist das Prozedere vom genannten Stand der Technik bekannt. Die folgenden Schritte 13 bis 18 schildern die vorliegende Erfindung.

Schritt 13: Es besteht keine Warteschlange W, ihr Abbild w ist Null, d.h. der FIFO-Speicher ist leer. Auf dem Bus 14 passiert ein Nicht-Anfragepaket N, auf dem Bus 16 ein Leerpaket E.

Schritte 14 und 15: Da der FIFO-Speicher 30 leer ist und bei Schritt 13 und 14 je ein Leerpaket E auf dem Bus 16 weitergegeben wird, wird ein auf dem Bus 14 ankommendes Anfragepaket R jeweils in ein Nicht-Anfragepaket N umgewandelt und als solches weitergesandt. Diese Ereignisse sind jeweils durch das Zeichen Z gekennzeichnet.

Schritt 16: Bei Schritt 15 passiert auf dem Bus 16 ein Informationspaket B, daher wird bei Schritt 16 ein Anfragepaket R als solches weitergegeben. Der FIFO-Speicher 30 füllt sich aufgrund des Anfragepaketes R, entleert sich jedoch sofort wieder, da auf dem Bus 16 ein Leerpaket E passiert.

Schritt 17: Auf dem Bus 14 passiert ein Nicht-Anfragepaket N, auf dem Bus 16 ein Leerpaket E.

Schritt 18: gleich wie bei Schritt 15.

Aus dem Beispiel von Fig. 4 leiten sich folgende allgemeinen Verfahrensschritte und Bedingungen ab:

In jedem Knoten 12, dessen FIFO-Zähler 30 leer ist, wird für jedes auf die Busleitung (z.B. 16) der einen Richtung ausgesandte Leerpaket E ein Anfragepaket R der jeweils anderen Richtung in ein Nicht-Anfragepaket N umgewandelt und als solches ausgesandt bzw. weitergegeben. Als ausgesandte Leerpakete E kommen dabei sowohl vom jeweiligen Knoten 12 gerade selbst erzeugte Leerpakete als auch auf der Busleitung passierende Leerpakete infrage.

Auf einer ringförmigen Übertragungseinrichtung 10, 11 muss jeweils wenigstens einer der Knoten 12 aus verbrauchten Paketen Leerpakete E erzeugen. Bevorzugt dienen jedoch mehrere oder gar alle Knoten 12 als Quelle für Leerpakete E. In diesen Fällen bewirkt das Vernichten von Anfragepaketen R in der geschilderten Weise bzw. deren Umwandeln in Nicht-Anfragepakete N ein Verkürzen der jeweiligen Warteschlangen W sowie eine Reduzierung der räumlichen Ausdehnung dieser Warteschlangen. Weiter wird die mittlere Zugriffszeit für alle Knoten 12 vermindert, da weniger Anfragepakete R umlaufen und sich damit die mittlere Zeit bis zum Vorbeilaufen jeweils eines benützbaren Leerpaketes E verkürzt.

Das Verfahren zum Verkürzen einer eventuell bestehenden, verteilten Warteschlange W basiert nach dem bisher Beschriebenen darauf, dass bei leerem FIFO-Speicher 30 für jedes ausgesandte Leerpaket E zeitlich unmittelbar nachfolgend ein Anfragepaket R in ein Nicht-Anfragepaket N umgewandelt wird. Dies ist unnötig einschränkend. Allgemeiner muss nur verlangt werden, dass für alle während eines nicht zu langen Zeitintervalls T1 ausgesandten Leerpakete E jeweils während eines nachfolgenden, gleich langen Intervalls T2 maximal die gleiche Anzahl von Anfragepaketen R umgewandelt werden kann. Die Länge der Zeitintervalle T kann dabei beispielsweise fest eingestellt der Dauer von zehn Paketlängen entsprechen. Ein Optimum ergibt sich hierbei jedoch dann, wenn die Zeitintervalle T für jeden Knoten 12 individuell so gewählt werden, dass ihre Länge genau der Laufzeit der Pakete von diesem jeweiligen Knoten 12 zum jeweils benachbarten Knoten in Richtung der Busleitung 16 entsprechen. In diesem ausgezeichneten Fall resultiert jeweils eine minimale Reaktionszeit von Knoten zu Knoten. Andererseits erfordert dieses Optimum für jeden Knoten 12 eine individuelle Einstellung der Zeitintervalle T, die entweder manuell oder besser automatisiert erfolgen muss. Weiter können nach jedem Paket die Intervalle T1 und T2 verschoben werden, um quasi fliessend eine zeitliche Mittelung des Auftretens der Leerpakete E und der Anfragepakete R zu erreichen.

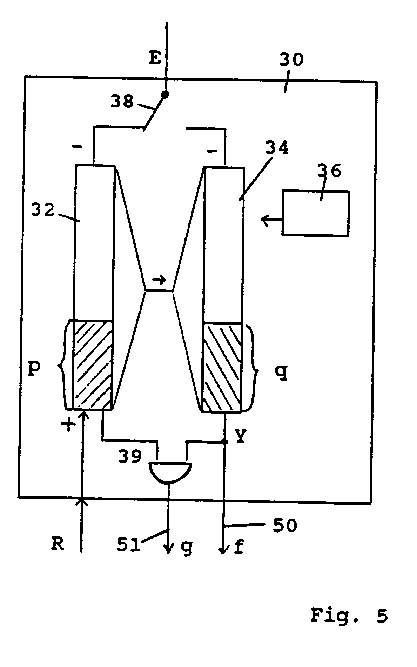

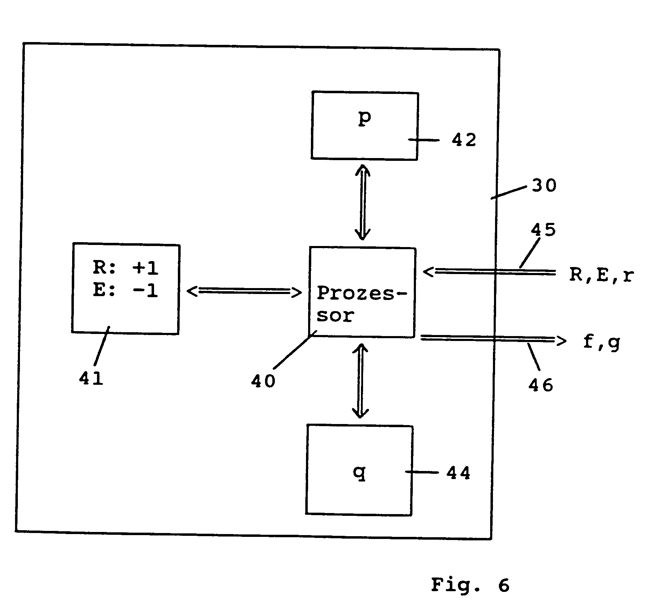

Fig. 5 zeigt ein erstes Blockschaltbild des FIFO-Speichers 30 für das Abbild w der Warteschlange W. Dieser Speicher ist ausgebildet als Einheit, die einen Vorwärts/Rückwärtszähler 32, einen Rückwärtszähler 34, einen Schalter 38, ein UND-Tor 39 und eine zugeordnete Steuerung 36 umfasst. Der Zähler 32 erhöht bei jedem passierenden Anfragepaket R seinen Zählerstand um (+)1 und erniedrigt bei der gezeigten Stellung des Schalters 38 bei jedem passierenden Leerpaket E den Zählerstand um (-)1. Der jeweilige resultierende Zählerstand p entspricht dem Abbild w der Warteschlange W. Sobald der jeweilige Knoten 12 eine eigene Anfrage r startet, wird der jeweilige aktuelle Zählerstand p parallel in den Zähler 34 übertragen und dort als Zählerstand q eingetragen. Anschliessend wird im Zähler 32 der Zählerstand p auf Null gestellt und der Schalter 38 auf Durchlass zum Zähler 34 geschaltet. Im folgenden erniedrigt der Zähler 34 jeweils seinen Zählerstand q um (-)1, wenn ein Leerpaket E passiert und der Zähler 32 erhöht seinen Zählerstand p um (+)1, wenn ein Anfragepaket R passiert. Sobald der Rückwärtszähler 34 den Zählerstand q gleich Null erreicht, erhält der jeweilige Knoten 12 die Erlaubnis Y (Fig. 4) zum Aussenden der genannten eigenen Anfrage r in Form eines Anfragepaketes R und die nächste eigene Anfrage r kann entsprechend dem Beschriebenen in die Warteschlange W eingefügt werden. Solange der Zähler 34 leer ist bzw. auf Null steht erscheint am Ausgang 50 ein Signal f. Ist auch der Zähler 32 leer, so erscheint über das UND-Tor 39 am Ausgang 51 das weitere Signal g. Diese Signale f und g werden im Zusammenhang mit Fig. 6 erläutert.

Fig. 6 zeigt ein zweites Blockschaltbild des FIFO-Speichers 30. Dieser Speicher 30 umfasst einen Prozessor 40, einen Programmspeicher 41 und zwei Zählspeicher 42, 44. Dieser FIFO-Speicher 30 arbeitet aufgrund eines im Programmspeicher 41 gespeicherten Programms gleich wie die Schaltung von Fig. 5, wobei die Zählspeicher 42, 44 den Zählern 32, 34 entsprechen, d.h. die Zählerstände p bzw. q halten. Die Auslöse-Ereignisse R, r, E werden dem FIFO-Speicher 30 über den Eingang 45 eingegeben. Am Ausgang 46 erscheinen die Ausgangssignale f und g, wenn der Zählerstand q gleich Null ist bzw. wenn die Zählerstände q und p beide gleich Null sind. Das Vorliegen des Ausgangssignals f erlaubt jeweils das Starten einer eigenen Anfrage r. Liegt ein Ausgangsssignal g vor, dann kann jeweils ein ankommendes Anfragepaket R in ein Nicht-Anfragepaket N umgewandelt werden.

Eine Variante zu den FIFO-Speichern 30 von Fig. 5 und 6 besteht darin, dass im Zähler 32 bzw. im Zählspeicher 42 ständig der Zählerstand p durch Vorwärts/Rückwärtszählen aktualisiert wird und keine Nullstellung beim Übertragen des jeweiligen Zählerstandes p in den Zähler 34 bzw. in den Zählspeicher 44 erfolgt.

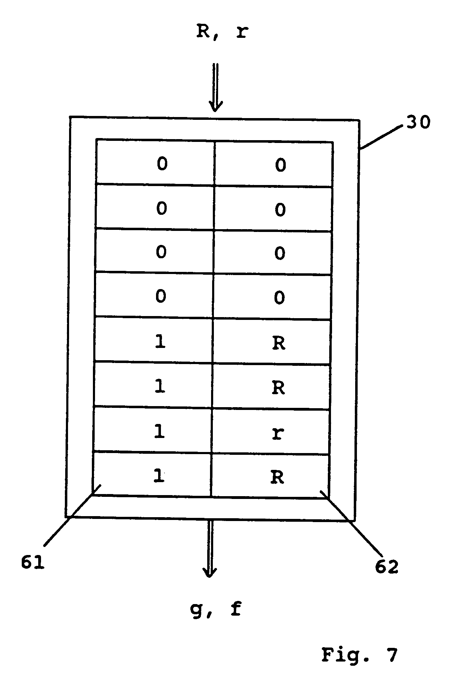

Fig. 7 zeigt eine weitere Variante des FIFO-Speichers 30. Dieser weist in Art eines kommerziellen FIFO's mehrere, z.B. acht Speicherzeilen auf mit jeweils mehreren parallelen Bits. Diese Bits werden in der linken Spalte 61 verwendet zur Anzeige, ob die Zeile leer oder besetzt ist (dargestellt als 0 bzw. 1). In der rechten Spalte 62 werden die Symbole R und r für die Art der Anfrage und 0 für "leer" verwendet. Der Speicher 30 wird durch die Anfragen R und r gespeist und gibt die Signale g und f ab.

Andere als die geschilderten drei Ausführungsbeispiele des FIFO-Speichers 30 sind ohne weiteres möglich.

Das Verfahren zum möglichst raschen Eliminieren von Anfragepaketen R wurde nur für eine der beiden Übertragungsrichtungen geschildert. Die Erweiterung auf die gleichzeitige Verwendung für beide Übertragungsrichtungen ist unproblematisch und in der Praxis bevorzugt. In diesem Fall werden die Paketbereiche 23 und 24 jedes Pakets 21 jeweils unabhängig voneinander für die eine bzw. für die andere Übertragungsrichtung verwendet.

Das Verfahren ist grundsätzlich für jede Übertragungseinrichtung 10 mit zwei parallelen, in der übertragungsrichtung einander entgegengesetzt laufenden Busleitungen 14, 16 geeignet. Die ringförmigen Übertragungseinrichtungen sind für das Verfahren jedoch besonders geeignet.

Die Bereiche 23, 24 im Kopfteil 22 der Pakete 21 dienen zur Unterscheidung von Leerpaketen E und Informationspaketen B sowie von Nicht-Anfragepaketen N und Anfragepaketen R. Zu diesen Unterscheidungen genügt jeweils ein einziges Bit. Es ist jedoch aus Gründen erwünschter Redundanz oder ähnlichem ohne weiteres möglich, diese Bereiche 23, 24 auf zwei oder mehr Bit zu erweitern.

## Patentansprüche

1. Verfahren zum Verkürzen einer verteilten Warteschlange (W), die auf einer digitalen Übertragungsleitung mit einer Mehrzahl von Knoten (12) besteht,
· wobei auf einer (16) von zwei unverzweigten, zueinander parallelen Busleitungen (14, 16) ununterbrochen in der einen Richtung Leerpakete (E) und Informationspakete (B) und auf der anderen der beiden Busleitungen (14) in der anderen Richtung und mit gleicher Übertragungsrate Nicht-Anfragepakete (N) und Anfragepakete (R) laufen,
· wobei an jeweils einer Stelle der einen Busleitung (16) Leerpakete (E) und an einer entsprechenden Stelle der anderer Busleitung (14) Nicht-Anfragepakete (N) erzeugt werden,
· wobei die Knoten (12) an beide Busleitungen (14, 16) angeschlossen sind und jeder Knoten (12) Informationspakete (B) empfängt und aussendet,
· wobei jeder Knoten (12) laufend aufgrund der bei ihm ankommenden und von ihm weitergegebenen Anfragepakete (R) und Leerpakete (E) ein Abbild (w) des für ihn relevanten Teils der Warteschlange (W) besitzt,
· und wobei jeder Knoten (12), der selbst Information aussenden möchte, nacheinander und wiederholt ein ankommendes Nicht-Anfragepaket (N) in ein Anfragepaket (R) umgewandelt aussenden, seinen Sendewunsch (r) in sein Warteschlangenabbild (w) einreicht, und sobald dieses eine Sendeberechtigung signalisiert, ein ankommendes Leerpaket (E) mit Information füllt und als Informationspaket (B) wiederaussendet,
dadurch gekennzeichnet,
- dass wenigstens einer der Knoten (12) Leerpakete (E) und Nicht-Anfragepakete (N) erzeugt, und
- dass jeder Knoten (12), der entweder selbst ein Leerpaket (E) gebildet hat oder der ein empfangenes Leerpaket (E) weitergibt und für den sein Warteschlangenabbild (w) Berechtigung signalisiert, zugeordnet zu jedem solchen Leerpaket (E) ein Anfragepaket (R) in ein Nicht-Anfragepaket (N) umwandelt und als solches weitergibt.

2. Verfahren nach Anspruch 1,
dadurch gekennzeichnet,
dass eine Mehrzahl von Knoten (12) Leerpakete (E) und Nichtanfragepakete (N) erzeugt.

3. Verfahren nach Anspruch 1,
dadurch gekennzeichnet,
dass jeder Knoten (12) Leerpakete (E) und Nicht-Anfragepakete (N) erzeugt.

4. Verfahren nach Anspruch 1,
dadurch gekennzeichnet,
dass in einem Knoten (12) das Warteschlangenabbild (w) Berechtigung signalisiert, solange es (w) keine Warteschlange (W) anzeigt.

5. Verfahren nach Anspruch 1,
dadurch gekennzeichnet,
dass jeder Knoten (12) zu jedem solchen Leerpaket (E) unmittelbar nachfolgend ein Anfragepaket (R) in ein Nicht-Anfragepaket (N) umwandelt.

6. Verfahren nach Anspruch 1,
dadurch gekennzeichnet,
dass jeder Knoten (12) zu jedem solchen Leerpaket (E) innerhalb eines nachfolgenden Zeitinterwalls (T) vorgegebener Länge ein Anfragepaket (R) in ein Nicht-Anfragepaket (N) umwandelt.

7. Verfahren nach Anspruch 6,
dadurch gekennzeichnet,
dass die Länge des Zeitintervalls (T) für jeden Knoten (12) so festgelegt wird, dass sie der Laufzeit der Pakete vom jeweiligen Knoten zum jeweils benachbarten Knoten in Richtung der Leer- (E) und Informationspakete (B) entspricht.

8. Verfahren nach Anspruch 1,
dadurch gekennzeichnet,
dass jedes Paket (21) unabhängig von seiner Laufrichtung für die jeweils eine Laufrichtung angibt, ob es sich um ein Leerpaket (E) oder um ein Informationspaket (B) handelt und gleichzeitig unabhängig hiervon für die jeweils andere Laufrichtung angibt, ob es sich um ein Anfragepaket (R) oder um ein Nicht-Anfragepaket (N) handelt.

## Claims

1. Method for shortening a distributed queue (W), which exists on a digital transmission line with a plurality of nodes (12),
- wherein on a first (16) of two non-branching, parallel bus lines (14, 16) continuously in the one direction travel empty packets (E) and information packets (B) at a given transmission rate, and on the second of said bus lines (14) in the opposite direction and with the same transmission rate travel non-request packets (N) and request packets (R),
- wherein at least at one part of said first bus line (16) empty packets (E) are generated, and at a corresponding part of said second bus line (14) non-request packets (N) are generated,
- wherein said nodes (12) are connected to both said bus lines (14, 16), and each said node (12) receives and transmits information packets (B),
- wherein each said node (12) maintains a respective dynamic image (w) of its relevant part of said distributed queue (W), said dynamic image continuously being built up via the request packets (R) and the empty packets (E) received and transmitted by said node,
- and wherein each said node (12), which wants to transmit information, successively and repeatedly retransmits a received non-request packet (N) changed into a request packet (R), inputs its request for transmission (r) in its dynamic image (w), and, as soon as this dynamic image signals permission, fills its information to be transmitted into an emty packet (E) received and retransmits this packet as an information packet (B),
characterized in
- that at least one of said nodes (12) generates empty packets (E) and non-request packets (N), and
- that each node (12), which either for itself has generated an empy packet (E) or which retransmits a received empty packet (E), and for which node its dynamic image (w) signals permission, associated to each such empty packet (E) changes a request packet (R) into a non-request packet (N) and retransmits this non-request packet.

2. Method according to claim 1,
characterized in
that a plurality of nodes (12) generates empty packets (E) and non-request packets (N).

3. Method according to claim 1,
characterized in
that each node (12) generates empty packets (E) and non-request packets (N).

4. Method according to claim 1,
characterized in
that the dynamic image (w) of a node (12) always signals permission, as long as it shows no queue (W).

5. Method according to claim 1,
characterized in
that each node (12) to each such empty packet (E) immediately succeeding changes a request packet (R) into a non-request packet (N).

6. Method according to claim 1,
characterized in
that each node (12) to each such empty packet (E) within a succeeding time interval (T) of given length changes a request packet (R) into a non-request packet (N).

7. Method according to claim 6,
characterized in
that said length of said time interval (T) is arranged for each node (12) in such a way, that said length is equal to the runlength of the packets from the respective node to its neighbouring node in the direction of the empty (E) and the information packets (B).

8. Method according to claim 1,
characterized in
that each packet (21) independently of its running direction indicates for the one direction, whether said packet is an empty packet (E) or is an information packet (B), and at the same time and independently indicates for the other direction, whether said packet is a request packet (R) or is a non-request packet (N).

## Revendications

1. Procédé permettant de réduire la longueur d'une file d'attente répartie (W) existant sur une ligne de transmission avec une multitude de noeuds (12),
. des paquets vides (E) et des paquets d'informations (B) circulant sans interruption dans l'une des directions sur l'une (16) de deux lignes de bus (14, 16) non-ramifiées, parallèles l'une par rapport à l'autre, et des paquets de non-interrogation (N) ainsi que des paquets d'interrogation (R) circulant sur l'autre des deux lignes de bus (14), en direction opposée et avec le même débit de transmission,
. des paquets vides (E) étant générés en un endroit respectif de l'une des lignes de bus (16) et des paquets de non-interrogation (N) étant générés en un endroit correspondant de l'autre ligne de bus (14),
. les noeuds (12) étant raccordés aux deux bus de ligne (14, 16) et chaque noeud (12) recevant et émettant des paquets d'information (B),
. chaque noeud (12) possédant, en raison des paquets d'interrogation (R) et des paquets vides (E) arrivant chez lui et étant réacheminés par lui, une image (w) de la partie importante pour lui de la file d'attente (W),
. et chaque noeud (12) souhaitant soi-même émettre des informations émettant successivement et de façon réitérée un paquet de non-interrogation (N) arrivant et transformé en un paquet d'interrogation (R), soumettant son désir d'émettre (r) dans son image de la file d'attente (w) et dès que celle-ci signale une autorisation d'émettre, remplissant un paquet vide (E) arrivant d'informations et le réémettant comme paquet d'information (B),
caractérisé en ce que au moins l'un des noeuds (12) génère des paquets vides (E) et des paquets de non-interrogation (N), et
- que chaque noeud (12) ayant lui-même formé un paquet vide (E) ou qui retransmet un paquet vide reçu (E) et pour lequel son image de la file d'attente (w) signale une autorisation, transforme un paquet d'interrogation (R) attribué à un tel paquet vide (E) en un paquet de non-interrogation (N) et le retransmet comme tel.

2. Procédé selon revendication 1,
caractérisé en ce qu'une multitude de noeuds (12) génère des paquets vides (E) et des paquets de non-interrogation (N).

3. Procédé selon revendication 1,
caractérisé en ce que chaque noeud (12) génère des paquets vides (E) et des paquets de non-interrogation (N).

4. Procédé selon revendication 1,
caractérisé en ce que dans un noeud (12) l'image de la file d'attente (w) signale une autorisation tant qu'elle (w) n'indique pas de file d'attente (W).

5. Procédé selon revendication 1,
caractérisé en ce que chaque noeud (12) transforme pour chaque tel paquet vide (E) immédiatement à la suite un paquet d'interrogation (R) en un paquet de non-interrogation (N).

6. Procédé selon revendication 1,
caractérisé en ce que chaque noeud (12) transforme pour chaque tel paquet vide (E) un paquet d'interrogation (R) en un paquet de non-interrogation (N) dans un intervalle de temps consécutif (T) de durée donnée.

7. Procédé selon revendication 6,
caractérisé en ce que la durée de l'intervalle de temps (T) est défini pour chaque noeud (12) de manière telle qu'elle correspond au temps d'acheminement des paquets du noeud respectif vers le noeud avoisinnant respectif, dans la direction des paquets vides (E) et des paquets d'information (B).

8. Procédé selon revendication 1,
caractérisé en ce que chaque paquet (21) indique, indépendamment de sa direction d'acheminement, pour la direction respective, s'il s'agit d'un paquet vide (E) ou d'un paquet d'informations (B), et indique en même temps pour l'autre direction s'il s'agit d'un paquet d'interrogation (R) ou d'un paquet de non-interrogation (N).
